# EUROPEAN PATENT APPLICATION

(11) **EP 2 073 002 A1**
(43) Date of publication of application: **24.06.2009**
(21) Application number: 07024827.3
(22) Date of filing: 20.12.2007
(51) Int. Cl.: G01N 25/72, G01N 27/90, G01N 21/89

(54) **Object processing system**

(71) Applicant: Montanuniversität Leoben, 8700 Leoben (AT)
(72) Inventor: Oswald-Tranta, Beate Dr., 8700 Leoben (AT); O' Leary, Paul, Prof. Dr., 8323 St. Marein bei Graz (AT)
(74) Representative: Haeusler, Rüdiger Hans-Jörg

(57) **Abstract**

An apparatus for examining an object is provided which comprises an induction coil, a conveying device, and an imaging device, wherein the conveying device is adapted to transport an object to a position above the induction coil and is further adapted to release the object at the position above the induction coil, and wherein the induction coil is adapted to generate eddy currents in the object falling through the induction coil. Furthermore, the imaging device is adapted to take an image from the object after the eddy currents were generated in the object. In particular, the falling may be induced by the gravity and may be a free fall.

## Description

The invention relates to an apparatus for examining an object.

The invention further relates to a method of examining an object.

Moreover, the invention relates to a program element.

Further, the invention relates to a computer-readable medium.

Fabricated elements (for instance cast) are manufactured in large number and in large geometrical variety. Such elements, members or parts are employed, for instance, in automobile industry. For ensuring the reliability of devices employing such elements a quality control of the elements has to be performed. To an increasing amount so-called 100% quality controls are requested, i.e. every element has to be checked before it is employed or integrated into the device. Such a 100% quality control needs a fast, nondestructive and automated control.

Nowadays cracks in metal elements are checked or inspected by a so-called magnet flux methods, in which magnetic powder which is mixed with fluorescent dye accumulate around cracks. The fluorescent dye is excited by ultraviolet light and the element is visually checked by an inspector. In addition, the system for examining the object may comprise a camera for examining the metal element.

Another method of examining depends on sound waves or oscillations induced into the object to be examined. In such a method the object is excited by knocking on the object and interpreting the resulting sound waves.

Other nondestructive examining procedures are based on X-ray or computer tomography devices.

A further nondestructive procedure for examining an object may be based on eddy currents induced into an object. Such methods are based on detailed scanning of the surface of the object to be examined. However, due to the necessary detailed scanning of the object in the known devices these procedures are time consuming and thus cost intensive.

Therefore, there may be a need to provide an apparatus and a method of a nondestructive examination of an object having an increased effectiveness and/or an increased flexibility.

In order to meet the need defined above, an apparatus for examining an object, a method of examining an object, a program element, and a computer readable medium according to the independent claims are provided.

According to an exemplary embodiment of the invention, an apparatus for examining an object comprises an induction coil, a conveying device, and an imaging device, wherein the conveying device is adapted to transport an object to a position above the induction coil and is further adapted to release the object at the position above the induction coil, and wherein the induction coil is adapted to generate eddy currents in the object falling through the induction coil. Furthermore, the imaging device is adapted to take an image from the object after the eddy currents were generated in the object. In addition the imaging device may be adapted to take a sequence of images, i.e. a plurality of images having a chronological order. In particular, the falling may be induced by gravity and may be a free fall. In particular, the conveying device may be adapted to provide the object at a first height, while the induction coil is arranged at a second height which is lower than the first height. In particular, the object may be a workpiece, e.g. a metallic cast or another metal object. For example, the imaging device may be an infrared camera.

According to an exemplary embodiment a method of examining an object is provided comprises conveying an object to a first position above an induction coil, dropping the object at the first position in such a way that the object falls through the induction coil, inducing eddy currents into the object by the induction coil, and taking an image of the object after the eddy currents have been induced. In particular, the method may further comprise performing an image processing of the taken image by an image processing unit.

According to an exemplary embodiment of the invention a program element is provided, which, when being executed by a processor, is adapted to control or carry out a method according to an exemplary embodiment of the invention.

According to an exemplary embodiment of the invention a computer-readable medium, in which a computer program is stored which, when being executed by a processor, is adapted to control or carry out a method according to an exemplary embodiment of the invention.

By using an automated image processing it may be possible to provide a fast, efficient, flexible and robust method for examining or inspecting objects, e.g. workpieces. In particular, it may be possible to examine a wide variety of objects having different shapes or forms even objects having a complex shape like exhaust manifolds. Furthermore, it may be possible to singularize the objects before the objects are dropped so that it may be ensurable that objects, e.g. workpieces, fall one by one through the induction coil. By employing such a fast falling procedure it may be possible to archive a high working cycle, e.g. about less than five seconds, i.e. possibly about one to two seconds.

The using of an image for examining the object may ease the examining of the object in particular compared to an examining procedure based on sound waves, since such sound wave based examining procedures may necessitate pre-testing and simulations in order to verify that the induced sound waves can detect cracks in every region of the object.

A gist of an exemplary aspect of the invention may be seen in the providing of a fast and reliable method or procedure for examining an object, e.g. a metallic workpiece, for cracks and/or faults, e.g. oxide layers existing in the metallic workpiece. The method may be based on a dropping of the workpiece through an induction coil. Such a dropping may ensure that eddy currents are induced into the workpiece only for a short time so that it may be avoidable that the whole surface of the object to be examined is heated up by the eddy currents so that primarily only the areas around a crack are heated up by the eddy currents. Thus, a greater temperature difference may be achievable between cracked regions and regions no faults are present. As well as cracks impurities like oxide layers may cause that a non-uniform temperature profile arises, since the region of such an impurity may be heated to another temperature than the metallic regions. Such oxide layers may in particular be observable in components comprising or made of steel, alloys comprising aluminum, e.g. steel-aluminum alloys, or alloys of aluminum and other metals, since these materials may be prone to formation of oxide layers, in particular in case an amount of aluminum is present in the alloys. By using the apparatus or a method according to an exemplary embodiment even thin layers of oxide may be detectable.

In the context of this application, the term "object" may particularly denote any physical structure (particularly any technical apparatus, member, or a portion thereof) in the real world which may be under development or production or machining. Examples of such a physical structure may be a member or tool such as a cast component or a larger multiple component apparatus. In particular, the object may be a metallic object, i.e. an object into which eddy currents may be inducible.

Next, further exemplary embodiments of the apparatus will be explained. However, these embodiments also apply to the method, to the program element and to the computer-readable medium.

According to another exemplary embodiment the apparatus further comprises an HF-generator coupled to the induction coil. In particular, the HF-generator may be adapted to generate a voltage pulse.

Thus, an efficient way may be provided to supply a pulsed voltage signal to the induction coil which may generate a magnetic field so that eddy currents may be induced into the object falling through the induction coil.

According to another exemplary embodiment of the apparatus the conveying device may be one out of the group consisting of a belt conveyor, a chute, a shaker conveyor, a hydraulic pusher, and a pneumatic pusher. In general every conveying device may be used which is suitable to transport an object to a position above the position of the induction coil. In particular, any conveying device may be suitable which is adapted to provide a continuous sequence of objects. However, even a transport or conveying device, like a robot, may be suitable which provide single workpieces, i.e. which may not be suitable to provide a continuous sequence of objects. Additionally, a further conveying device may also be arranged below the induction coil which further conveying device may be adapted to remove the objects after they fallen through the induction coil. Moreover, the conveying device may include a door, lid or flap which may be used in order to singularize a plurality of objects and which may be adapted to provide a triggering signal for the induction coil, the HF-generator and/or the imaging device.

According to another exemplary embodiment the apparatus further comprises a triggering unit, wherein the triggering unit is adapted to trigger the induction coil and the imaging unit in such a way that an image of the object is taken after the eddy currents are induced into the object. In particular, the image may be taken at a position a small distant below the induction coil, e.g. the imaging apparatus may be arranged and may be triggered in such a way that an image is taken in a region immediately beneath the induction coil. Moreover, the induction coil or an HF-generator supplying the induction coil with a voltage pulse and the imaging device may be triggered with a single triggering pulse or signal or by two different triggering pulses. For example, the triggering signal of the imaging device may be provided at such a point in time that the image of the object or workpiece is taken at a point in time at which a heating induced by the eddy currents is not smeared out throughout the surface of the workpiece.

According to another exemplary embodiment the apparatus further comprises a plurality of imaging devices, wherein the imaging devices are arranged and adapted in such a manner that they take images from the object from different directions. In particular, all imaging devices may be infrared cameras.

By using a plurality of cameras it may be possible to ensure that all sides of each object may be examined in a single examining step, thus it may be possible to speed up the examining procedure while at the same time increasing the robustness of the procedure. In particular, even objects of complex and/or various shapes may be easily examined when using a plurality of cameras.

According to another exemplary embodiment the apparatus further comprises a processing unit, wherein the processing unit is adapted to perform image processing of the taken image. In particular, the processing unit may form an image processing unit, which is adapted to process a sequence of images. By processing a plurality of images taken in a chronological order it may be possible to achieve a temporal resolution of the temperature profile of the object. Thus, it may be possible to derive information about heat conduction processes or heat dissipation processes which information may also be utilized to detect faults of the object under examination.

By providing a processing unit adapted to process the taken images it may be possible to speed up the examining or testing procedure of an object to be examined.

According to another exemplary embodiment of the apparatus the processing unit is adapted to detect areas of temperature differences. In particular, the processing unit may be adapted to detect areas on the surface of the object, e.g. a workpiece, having a higher temperature than the surrounding areas of the surface of the object, by performing image processing of the taken images, e.g. infrared images.

According to another exemplary embodiment of the apparatus the processing unit is adapted to identify cracks and/or inhomogeneities and/or oxide regions.

All these faults may lead to the fact that an inhomogeneous temperature profile of the workpiece will arise which can be imaged by an infrared camera.

Furthermore, it should be noted that according to an alternative aspect of the present invention the detection of oxide regions, e.g. oxide layers in a steel or steel-aluminium workpiece, or a workpiece made of an alloy comprising aluminium and any other suitable material, may also be performed by a apparatus for examining an object, wherein the apparatus comprises an induction coil and an imaging device, wherein the induction coil is adapted to encircle the object and is further adapted to induce eddy currents into the object, and the imaging device is adapted to take an image from the object after the eddy currents were generated in the object. In other words it may not be necessary that the object falls through the induction coil for detecting an oxide layer present in the object.

According to another exemplary embodiment the method further comprises taking a sequence of a plurality of images. In particular, the plurality of images may represent a chronological order of images. Furthermore, a processing unit may be adapted to process the plurality of images in order to achieve information about heat conduction or heat dissipation.

The exemplary aspects and exemplary embodiments defined above and further aspects of the invention are apparent from the examples of embodiment to be described hereinafter and are explained with reference to these examples of embodiment. In particular, the features disclosed in connection with one exemplary embodiment may be also combined with another exemplary embodiment.

The invention will be described in more detail hereinafter with reference to an example of embodiment but to which the invention is not limited.
Figure 1 schematically illustrate a cross sectional view of a metallic workpiece and an induction coil.
Figure 2 schematically illustrate an apparatus for examining an object.
Figure 3 shows images taken from examined objects.

The illustration in the drawing is schematically. In different drawings, similar or identical elements are provided with similar or same reference signs.

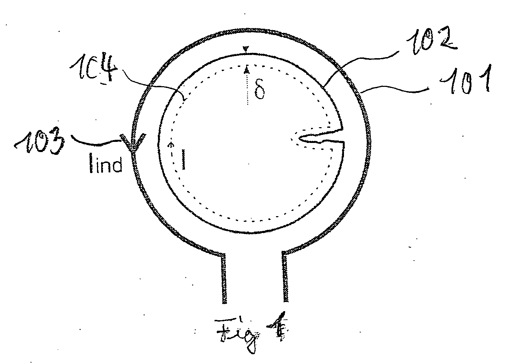

In the following, referring to **Fig. 1****,** a cross sectional view of a metallic workpiece 102 and an induction coil 101 is described. The induction coil may have a single turn as shown in Fig. 1 or may have a plurality of turns. The induction coil 101 may be supplied with a voltage pulse or a HF-current leading to an induction current I_{ind} as indicated by the arrow 103. This induction current generates a magnetic field. In case the workpiece 101 moves through the induction coil 101 eddy currents are induced into the workpiece. The eddy currents are limited to the skin of the workpiece, i.e. is restricted to a thickness δ corresponding to the so-called skin depth. This skin depth depends on the material of the workpiece and in particular on the magnetic characteristics, e.g. the magnetic permeability value, of the material. Furthermore, Fig. 1 schematically illustrates that the path of the eddy currents is deflected by cracks or faults at the surface or near to the surface of the workpiece, which is indicated by the dotted line 104. As a consequence of the deflection an inhomogeneous temperature distribution results in the workpiece. In particular, in magnetic materials the regions or areas around the cracks are heated up to a greater extend than the regions farther away from the cracks while in non magnetic materials these regions exhibit a lower temperature. For the detection of cracks it may be advantageous to heat up the metal object only for a short time, since over time heat conduction will smear out the temperature differences and thus the contrast between crack areas and sound areas. Thus, it may be advantageous that the object is present in the induction coil only for a short time period, i.e. moves fast through the induction coil.

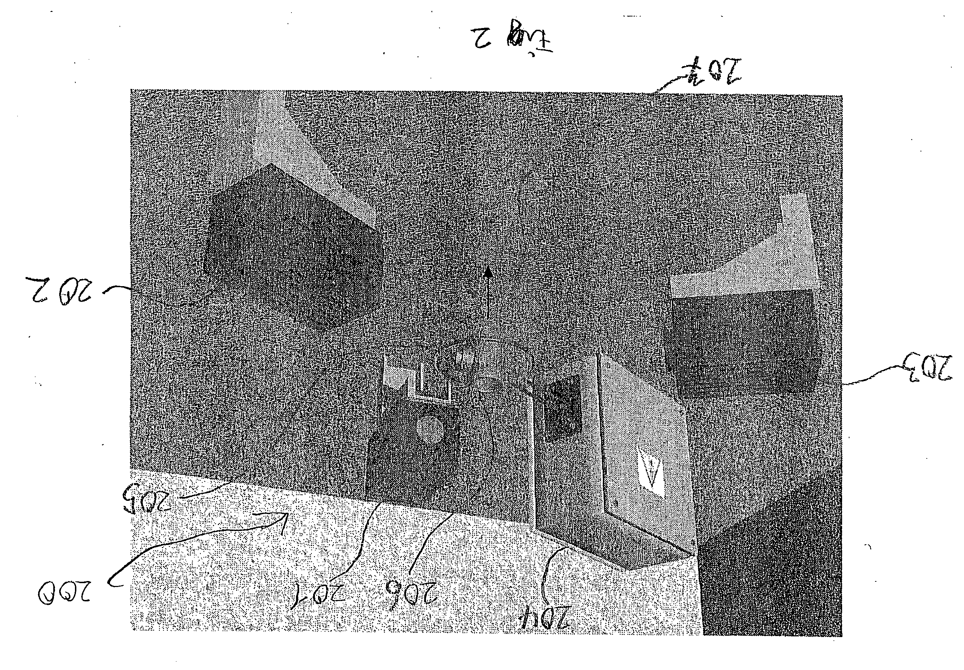

In the following, referring to **Fig. 2****,** a schematically illustration of an apparatus for examining an object is shown. The apparatus 200 comprises a first camera 201, a second camera 202 and a third camera 203. Preferably, all cameras are infrared cameras. Of course the number of cameras may be greater or smaller than three. According to Fig. 2 the cameras are arranged substantially symmetrically with respect to the induction coil 205. That is, in case of three cameras the cameras may have an angular offset of 120° with respect to each other. In particular, the number of cameras may depend on the form of the object or workpiece to be inspected. As well as the number the arrangement of the cameras mainly depends on the form of the workpiece. In general the number and the arrangement are chosen in such a way that it is ensurable that all surface areas of the workpiece which has to be inspected are covered by images taken by the cameras. Furthermore, the apparatus comprises an HF-generator 204 which is connected to the induction coil 205 and which is adapted to supply the induction coil 205 with an HF-current. Moreover, the apparatus may comprise a processing unit which is not shown in Fig. 2 and which may be adapted to process images taken by the cameras shown in Fig. 2. By using such image processing units it may be possible to locate hot spots on the infrared images and thus to determine whether a specific workpiece is faulty of not.

Furthermore, an object or workpiece 206 is shown in Fig. 2 which falls through the induction coil 205. To indicate the movement of the workpiece 206 an arrow 207 is shown in Fig. 2 as well. In addition to the shown components the apparatus comprises a conveyor device or mechanism, e.g. a belt conveyor, a chute or a shaker conveyor, which is not shown in Fig. 2 for sake of clarity. The conveyor device is positioned in such a way that it is adapted to transport the workpiece 206 to a position above the induction coil where the workpiece may be released and thus falls through the induction coil 205 by the influence of gravity. Furthermore, the apparatus 200 may comprise a second conveyor mechanism adapted to collect and remove the workpiece after passing the induction coil and after it has been imaged by the cameras. For providing a suitable infrared image and to ensure that the temperature differences induced by the eddy currents around a crack the speed at which the workpiece passes the induction coil should be great, e.g. above about 1 m/s, i.e. about 1 m/s to 1.5 m/s. Depending on the size of the workpiece such a speed may lead to a time period of about 0.1 s the workpiece is under influence of the induction coil. That is, the time period of 0.1 s may correspond to the time period eddy currents are induced into the workpiece. However, such a time period may be sufficient to heat up areas around a possible crack by some degree Celsius.

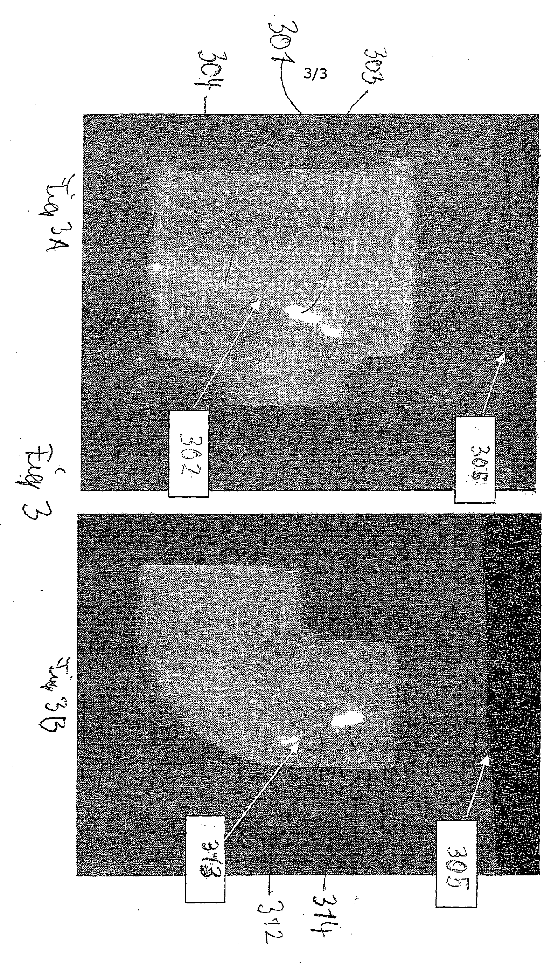

**Fig. 3** shows infrared images taken from examined objects. In particular, Fig. 3A shows an infrared image of a workpiece 301 a short distance below an induction coil 305 of an apparatus for examining an object. On the image a crack 302 can be identified by the hot spots 303 and 304 arranged along the crack 302. Fig. 3B also shows an infrared image of a workpiece 311 a short distance below an induction coil 315 of an apparatus for examining an object. On the image a crack 312 can be identified by the hot spots 313 and 314 arranged along the crack 312. In both images the cracks are clearly identifiable by the temperature which is higher than the temperature of the surrounding areas. Due to the fact that a clear identification of the hot spots is possible automated image processing may be performed, so that at the time the workpiece is collected on a position below the induction coil it may already been decided whether the workpiece is faulty or defective. Thus, it may be possible to sort the workpieces depending on the fact whether they are faulty or not.

Summarizing, according to an exemplary embodiment it may be possible to provide an apparatus for examining an object. A basic idea may be to drop a workpiece from a first position above an induction coil so that the workpiece falls through the induction coil which results in induced eddy currents in the workpiece. These eddy currents heat up the workpiece and in particular regions around cracks or faults are heated up more than sound areas. At a position slightly below the induction coil infrared images may be taken from the falling workpiece which are then analysed and processed to identify cracks or faults of the workpiece. By using such an apparatus it may be possible to realize a fast, nondestructive, automated crack detection or crack test possibly having a working cycle of about 1 s to 2 s. Such an apparatus may also be suitable to inspect a large number of workpieces having different forms, shapes or designs while providing an easy operation or handling.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. An apparatus for examining an object, the apparatus comprising
an induction coil,
a conveying device, and
an imaging device,
wherein the conveying device is adapted to transport an object to a position above the induction coil and is further adapted to release the object at the position above the induction coil,
wherein the induction coil is adapted to generate eddy currents in the object falling through the induction coil, and
wherein the imaging device is adapted to take an image from the object after the eddy currents were generated in the object.

2. The apparatus according to claim 1, further comprising:
an HF-generator coupled to the induction coil.

3. The apparatus according to claim 1 or 2,
wherein the conveying device may be one out of the group consisting of:
belt conveyor,
chute,
shaker conveyor,
hydraulic pusher, and
pneumatic pusher.

4. The apparatus according to any one of the claims 1 to 3, further comprising,
a triggering unit,
wherein the triggering unit is adapted to trigger the induction coil and the imaging unit in such a way that an image of the object is taken after the eddy currents are induced into the object.

5. The apparatus according to any one of the claims 1 to 4, further comprising:
a plurality of imaging devices,
wherein the imaging devices are arranged and adapted in such a manner that they take images from the object from different directions.

6. The apparatus according to any one of the claims 1 to 5, further comprising:
a processing unit,
wherein the processing unit is adapted to perform image processing of the taken image.

7. The apparatus according to claim 6,
wherein the processing unit is adapted to detect areas of temperature differences.

8. The apparatus according to claim 7,
wherein the processing unit is adapted to identify cracks and/or inhomogeneities and/or oxide regions.

9. A method of examining an object, the method comprising:
conveying an object to a first position above an induction coil,
dropping the object at the first position in such a way that the object falls through the induction coil,
inducing eddy currents into the object by the induction coil, and
taking an image of the object after the eddy currents have been induced.

10. The method according to claim 9, further comprising:
performing an image processing of the taken image by an image processing unit.

11. The method according to claim 9 or 10, further comprising:
taking a sequence of a plurality of images.

12. A program element, which, when being executed by a processor, is adapted to control or carry out a method of claim 9 of examining an object.

13. A computer-readable medium, in which a computer program is stored which, when being executed by a processor, is adapted to control or carry out a method of claim 9 of examining an object.
